# EUROPEAN PATENT SPECIFICATION

(11) **EP 2 818 037 B1**
(45) Date of publication and mention of the grant of the patent: **16.08.2017**
(21) Application number: 13173826.2
(22) Date of filing: 26.06.2013
(51) Int. Cl.: A01G 1/00

(54) **Method for growing herbs**
Verfahren zur Züchtung von Kräutern
Procédé de culture de plantes aromatiques

(43) Date of publication of application: 31.12.2014
(73) Proprietor: Swedeponic Holding AB, 421 32 Västra Frölunda (SE)
(72) Inventor: Jönsson, Ulf, BE-1410 Waterloo (BE)
(74) Representative: Awapatent AB

(56) References cited:
- GB-A- 1 515 831
- US-A- 5 365 693
- Anonymous: "Herb Growing", Heirloom Organics , 14 December 2012 (2012-12-14), XP002715889, Retrieved from the Internet: URL:https://web.archive.org/web/2012121410 1533/http://www.heirloom-organics.com/guid e/guidetogrowingherbs.html [retrieved on 2013-11-05]

## Description

### Technical Field

The present invention relates to the cultivation of herbs. Furthermore the present invention relates to improving quality and cold resistance of herbs.

### Background of the invention

Herbs are used for culinary purposes, in manufacturing and food industries. The major commercial form of culinary herbs is the dried product, in part because herbs in this form are easy to transport, store and market. A fairly recent development in herb production is fresh herbs, which may be sold in pots or in a harvested bundle. The herbs will provide a small volume of fresh material to households while, when sold in a pot, being an attractive ornamental plant. While fresh herbs are considered more flavourful and superior in quality to dried herbs, widespread commercialization of fresh pot herbs has been restricted due to high perishability and a relatively short shelf life. There are several methods to increase shelf life, mainly comprising cold storage and/or cold transportation or alternatively by using chemical- or biological agents to improve the general resistance or quality of the herb. Cold storage and/or cold transportation is an efficient method with which to reduce the metabolic activity of a plant, as the rate of biochemical reactions such as respiration in plants is reduced. However, some herbs such as basil and watercress cannot withstand low temperatures as their leaves will darken, discolour, and eventually collapse. Additionally, the aromatic oils may be affected, having a negative impact on the flavour. For these reasons for example basil should not be chilled below 15-10°C, as is common with cold storage and/or cold transport of other fresh herbs. Consequently, there are also methods to more specifically address the cold resistance, for example using temperature protective hoods, chemical- or biological agents or by cold hardening the plants during production.

Industrial green house production of herbs commonly comprises the steps of sowing and allowing the seed to germinate in a germination chamber for approximately one to seven days, until it has become a seedling. The duration depends on the herb in question. The seedling will then generally be transplanted and/or moved to a nursery, where the root system is allowed to develop under optimal conditions, including for example controlled irrigation from above the herbs. The herb seedling is cultivated in the nursery for 10-14 days, after which the herb is transplanted and/or moved to a gully system in a green house. In the gully system the herbs may take as much water and fertilizer as needed from below, where a nourishing mix of this is provided. The herbs may be moved relative each other in the gully system, so that herbs may grow without blocking or being blocked until they are ready for harvest, usually this takes approximately 20-40 days. The total production time is in average four to seven weeks until the fresh herb pot is ready to be shipped, however this varies depending on the type of herb, the season and ambient conditions. The preferred harvesting time is also based on studies of at what maturity stage the flavour of the herb is preferable, and even the aesthetic aspect of the size of the herb, wherein the preferences may vary with the intended market.

Fresh herbs usually have a shelf life of 6-7 days if delivered undamaged to the store. The short shelf life and the sensibility to cold temperatures imply that fresh herbs and in particular basil has a relatively high waste rate.

An object of the invention is to improve the cold resistance of herbs produced for fresh herb purposes, in particular for basil. This and other objectives, which will become apparent in the following, are achieved by the method as defined in the accompanying claims.

### Summary of the invention

The present invention is based on the insight that when the germinated seedling is held in a restrictive container before a second stage of growing the herb matures and develops oils which are more elastic, which contribute to an improved resistance to cold temperatures. Simultaneously the herb growth rate is significantly limited. The producer may therefore advantageously keep the herb at a preferred, and to the market more appealing size, despite being older and more mature.

According to one aspect of the invention a method is provided for growing herbs. The method comprises planting a herb, allowing the herb to germinate until the herb has sprouted, and becomes a herb seedling, performing one of transplanting to or maintaining the herb seedling in a restrictive container, where the herb seedling is held for a predetermined period of time before transplanting the herb seedling to a second stage, where the seedling is held in order to grow and develop a larger root system.

Transplanting the herb seedling to a restrictive container or maintaining the herb seedling in a restrictive container has the effect that the herb's root system will be prevented from growing, in comparison to when it is planted in a nursery. Because of this the herb will essentially stop growing while the root system is restricted. Meanwhile the herb will continue maturing, developing oils which are more elastic. More mature herbs, with more elastic oils, will be significantly more resistant to cold temperatures at a harvesting stage, compared to herbs that have not been transplanted to restrictive containers, and consequently have not reached a similar maturity degree when reaching the harvesting size.

In the context of the invention the term planting a herb is to be understood as meaning planting a herb seed, planting a prepared herb seedling already germinated from a herb seed, planting a herb cutling which is a sprout cut from an older plant, or planting an offshoot from another plant.

Furthermore in the context of the invention the herb may initially be planted in any container suitable for planting herbs and further on transplanted to a restrictive container according to the method, advantageously the herb may also be planted directly in the restrictive container, and in this case the herb would not be transplanted to a restrictive container but maintained in the restrictive container it was planted in. This may have the benefit of decreasing the number of manual work steps and it may also decrease the risk of damage to the herb.

Transplanting to or maintaining the herb seedling in restrictive containers provides the additional advantage that the output of a production facility may be increased by up to 25% as an effect of the smaller sized restrictive containers as compared to a nursery, which means that the herb seedlings may consequently be placed in closer proximity to one another for a larger part of the herb's life cycle.

According to at least one exemplary embodiment of the present invention the method for growing herbs for fresh herb purposes is advantageously applied to production of one of the herbs: basil, coriander or dill.

The effect of improved cold resistance is particularly noticed on the herb basil. Furthermore the method provides the added effect of improved flavour in herbs such as coriander and dill.

According to one exemplary embodiment of the invention the herb seedling is held in the restrictive container for a period in the range of 14-25 days, advantageously in the range of 18-25 days, and more preferably in the range of 21-23 days.

The period the herb seedling is held in the restrictive container may vary depending on the type of herb and also on the ambient conditions during growing. However, as mentioned above, the important factor is that the herb seedling is held in the restrictive container long enough to develop sufficiently elastic oils for improved cold resistance and/or improved flavour.

Furthermore according to one exemplary embodiment the second stage lasts for a period of 13-30 days, preferably in the range of 13-28 days and more preferably in the range of 13-22 days.

According to yet one exemplary embodiment of the invention the method further comprises a third stage wherein the herb seedling is provided progressively increased free surrounding space to grow until harvesting size is reached.

In the context of the invention the second stage may be a nursery and the third stage may be cultivation in a gully system. It is however also conceivable that the herb seedling is held in only one consecutive step after it has been moved from the restricting container and until it has reached harvest size.

According to one exemplary embodiment of the present invention, wherein when the method comprises a third stage, the second stage, during which the seedling is cultivated for growing and developing a root system, lasts for a period of 3-15 days, preferably in the range of 5-12 days and more preferably in the range of 8-10 days.

Furthermore according to one exemplary embodiment of the invention the third stage for cultivation until harvesting size is reached, lasts for a period of 10-19 days, advantageously in the range of 10-17 days and more advantageously in the range of 13-16 days.

In one example embodiment of the present invention the total time of production from sowing to harvesting is in the range of 36-50 days, advantageously in the range of 40-50 days and more advantageously in the range of 42-47 days.

According to at least one exemplary embodiment of the method according to the invention the herbs are transplanted into restrictive containers in close proximity, wherein every 70-120 restrictive containers occupy an area of 0.15-0.20 m².

According to at least one exemplary embodiment the herbs are transplanted to the second stage of the method, wherein every 8-60 containers occupy an area of 0.2-0.3 m².

In one exemplary embodiment of the invention the herb is held at a temperature in the range of 1-20 degrees Celsius during production, preferably in the range of 1-13 degrees Celsius.

According to one exemplary embodiment of the invention the restrictive container is a plug pot or a plug comprised on a plug tray.

According to at least one exemplary embodiment of the invention the plug or plug pot has a smaller opening diameter than 60 mm and a smaller height than 80 mm, and preferably a smaller opening diameter than 25 mm and a smaller height than 35 mm.

In the context of the invention the opening refers to the opening of the plug, wherein the herb is planted or transplanted. Additionally, the opening diameter may be interpreted as the diameter of a circle essentially sharing a plane spanned by the opening of the plug, wherein all edges of the opening are within the circle. Furthermore, the height should be understood as the distance from the opening of the plug to the other end, along the plug's central axis.

According to at least one exemplary embodiment, the plug has a rectangular cross-section, wherein each side is smaller than 60 mm and preferably smaller than 25 mm, and wherein the plug has a smaller height than 80 mm and preferably a smaller height than 30 mm.

Those skilled in the art will realise that different features of the present invention may be combined to create embodiments other than those described in the following

### Brief Description of the Drawings

For exemplifying purposes, the invention will be described in closer detail in the following with reference to embodiments thereof illustrated in the attached drawings, wherein:
Figure 1 shows a perspective view, partly in cross-section, of a basil seedling in a restrictive container.
Figure 2 shows a flow chart of the method according to the invention.

### Detailed Description

In the following detailed description, preferred embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention.

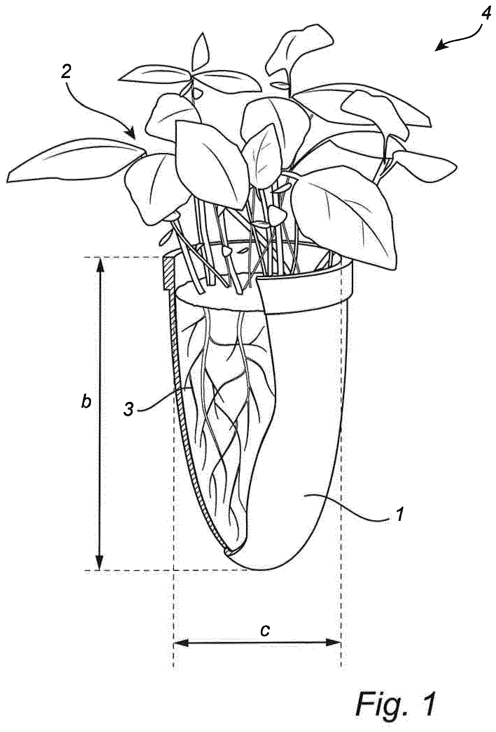

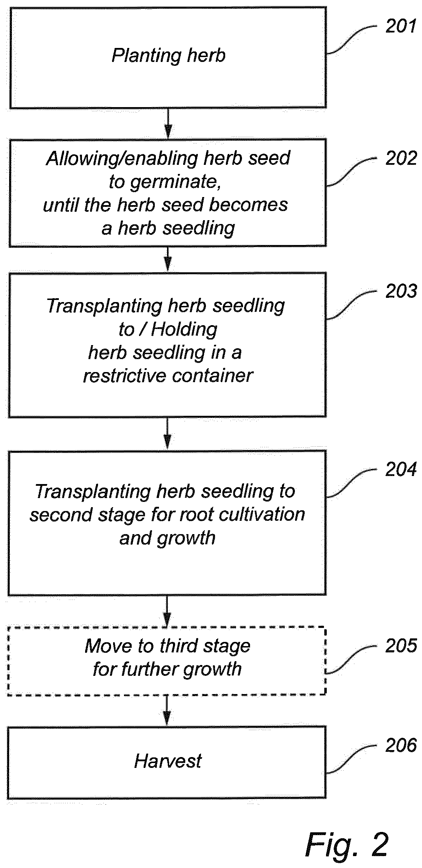

With reference to figure 1 and figure 2, one example embodiment of the method applied to the production of fresh basil will be described, starting with the step 201, wherein the basil seeds are sown. In the context of the invention it may be advantageous to sow directly into a restrictive container as this will save the effort of transplanting to the restrictive container after germination. During germination 202 the herbs are kept in a high humidity environment to trigger the seeds to start growing, becoming basil seedlings in this example embodiment.

After germination 202, which for basil takes approximately three days, the seedling 2 is maintained in a stage 203 where the container 1 will relatively soon be restrictive to the growth of the basil's root system 3. The restrictive container 1 used in stage 203, applied to the production of basil, is adapted to have a diameter c which is 25 mm or less and a height b that is 35 mm or less. Depending on environmental conditions the basil's root system 3 will typically outgrow the container within approximately five days, at which time the growth rate of the seedling 2 is essentially halted. The method according to the invention dictates that the herb is maintained in this restrictive container stage 203 for an extended period of time to at least partly achieve the objectives. In the example embodiment applied to basil the extended period last for an additional 17 days on average over the seasons, totalling 22 days on average for this stage 203. However, while maintained in this stage the basil is developing and becoming more mature. Since the restrictive container is relatively small and as the herbs will not grow so large at this stage there is room for approximately 25% more herb seedlings, for a larger part of the production cycle as compared to common growing of herbs.

The herb seedling 4 is thereafter transplanted to a second stage 204 after being held in the restrictive container. This stage may sometimes be referred to as the nursery, where the herb seedlings are cultivated in larger pots to develop the root system and grow. At this stage the herbs may for example be irrigated and fertilized from above. In the example embodiment of the invention the basil is held in the second stage for approximately 5 days. This duration is an approximate average over the seasons.

The basil, may be transplanted or moved to a third stage 205. At this stage the herbs take their water from below the containers, and the containers may advantageously be placed in gully systems where the herbs may be moved as they grow, so that they do not block each other. In this example embodiment, applied to basil, this stage 205 takes approximately 15 days until the basil is ready for harvest 206. Again, this duration is an approximate average over the seasons. From sowing to harvesting, the method according to the invention takes approximately 45 days on average over the year.

A person skilled in the arts will realize that there are possible variations to each stage of the method and to the material used, for example the duration may vary slightly depending on the herb in question.

Sowing of seeds may vary a lot depending on the herb, as some seeds are advantageously sown on top of the soil while other herbs are preferably sown in crevasses before being covered by a layer of soil. As there are extensive records of preferable sowing methods for the different herbs and as this is not within the specific scope of the invention this text will not go into further detail on sowing, such as the varying aspects of for example selecting and preparing the seed, the soil mix, the number of seeds in each container, etc.

For example, while as previously described there may be advantages to sowing in the restrictive container 1, a person skilled in the arts will realize that it is possible to implement the method according to the present invention by sowing in containers only used for stage 201 or only for stages 201 and 202. Furthermore it should be noted that procuring prepared containers with sown seeds and/or germinated seedlings and thereby omitting to perform stage 201 and/or stage 202, may also be possible within the scope of the invention. Similarly a person skilled in the art will also realize that it may be possible to use cutlings from older herbs as an alternative substitute to the germinated seedlings.

There are several environmental parameters that may be changed at each stage to optimize or improve for example growth rate or development of the herb's essential oils. Unless specifically addressed, these parameters, such as humidity, temperature, light wavelength, emitted lighting effect, etc. may be changed as needed within the inventive concept to adapt to for example the herb, season or ambient conditions. It should be noted that in some production facilities there are separate chambers for each of the stages of the method, wherein the herb is moved between each stage. Each chamber may be controlled to provide environmental parameters that are suitable for its intended stage.

Alternatively it may be possible to use one chamber for all stages of the method, or any number of chambers for the separate stages, wherein the environmental parameters may be controlled to be suitable for the current stage. Any alternative, with either one or more chambers is possible within the scope of the present invention.

The restrictive container may for production purposes be either one of a series of single containers that may be interconnected or comprised on a tray of restrictive containers such as plug trays. There is currently a variety of plug trays of various material, shape and size available on the market.

In one example embodiment of the invention, wherein the herb cultivated for fresh purposes is basil, the restrictive container is preferably a plug tray where each plug pot is smaller than 25 mm over the diameter and has a height/depth smaller than 35 mm. The plug may be essentially conical in shape, wherein the larger base is on top where the seed is sown, so that the seedling's root system grows in an essentially spiralling direction towards the bottom. However, it should be clear to the person skilled in the arts that the size and shape may vary slightly without adversely affecting the method.

The advantage of improved cold resistance to fresh pot basil will increase shelf life to more than the normal 6-7 days, and thereby providing a significant potential for decreasing the waste rate. Furthermore there are additional advantages to using the same method on other herbs, for example coriander and dill will have improved flavour as the plants are more mature at harvest.

Such and other obvious modifications must be considered to be within the scope of the present invention, as it is defined by the appended claims. It should be noted that the above-mentioned embodiments illustrate rather than limit the invention, and that those skilled in the art will be able to perform many alternative embodiments of the method without departing from the scope of the appended claims.

## Claims

1. A method for growing herbs, comprising:
- planting a herb (201),
- allowing the herb to germinate (202), until the herb has sprouted, and is a herb seedling,
- restricting the herb seedling's root growth by performing one of transplanting the herb seedling to a restrictive container or maintaining the herb seedling in a restrictive container (203),
- transplanting the herb seedling to a second stage, where the seedling is cultivated in order to grow and develop a larger root system.

2. A method for growing herbs according to claim 1, wherein the herb is one of Basil, Coriander or Dill.

3. A method for growing herbs according to any of the preceding claims, wherein the herb seedling is held in the restrictive container for a period in the range of 14-25 days.

4. A method for growing herbs according to any of the preceding claims, wherein the second stage lasts for a period of 13-30 days.

5. A method for growing herbs according to any of the preceding claims, further comprising:
- transplanting or moving the herb seedling to a third stage (205), wherein the herb seedling is provided progressively increased free surrounding space to grow until harvesting size is reached.

6. A method for growing herbs according to claim 5, wherein the second stage lasts for a period of 3-15 days.

7. A method for growing herbs according to any one of claims 5-6, wherein the third stage of cultivating the herb plant until harvesting size is reached lasts for a period of 10-19 days.

8. A method for growing herbs according to any of the preceding claims, wherein the total time of production from sowing to harvesting is in the range of 36-50 days.

9. A method for growing herbs according to any of the preceding claims, wherein herbs are transplanted into restrictive containers in close proximity, wherein every 70-120 restrictive containers occupy an area of 0.15-0.20 m².

10. A method for growing herbs according to any of the preceding claims, wherein herbs are transplanted to the second stage, wherein every 8-60 containers occupy an area of 0.2-0.3 m².

11. A method for growing herbs according to any of the preceding claims, wherein the herb is held at a temperature in the range of 1-20 degrees Celsius during production.

12. A method for growing herbs according to any of the preceding claims, wherein the restrictive container is a plug pot or a plug comprised on a plug tray.

13. A method for growing herbs according to claim 12, wherein the plug has a smaller opening diameter (c) than 60 mm, a smaller height (b) than 80 mm.

14. A method for growing herbs according to claim 12, wherein the plug has a rectangular cross-section, each side is smaller than 60 mm, and wherein the plug has a smaller height (b) than 80 mm.

## Patentansprüche

1. Verfahren zum Züchten von Kräutern, umfassend:
- das Anpflanzen eines Küchenkrauts (201),
- das Gestatten, dass das Küchenkraut aufkeimt (202), bis das Küchenkraut gesprossen ist und ein Krautsetzling ist,
- das Beschränken des Wurzelwachstums des Krautsetzlings durch Durchführen eines von Umpflanzen des Krautsetzlings in einen beschränkenden Behälter oder Halten des Krautsetzlings in einem beschränkenden Behälter (203),
- das Umpflanzen des Krautsetzlings in eine zweite Stufe, wobei der Setzling herangezüchtet wird, um ein größeres Wurzelsystem heranzuziehen und zu entwickeln.

2. Verfahren zum Züchten von Kräutern nach Anspruch 1, wobei das Küchenkraut eines von Basilienkraut, Koriander oder Gurkenkraut ist.

3. Verfahren zum Züchten von Kräutern nach einem der vorhergehenden Ansprüche, wobei der Krautsetzling in dem beschränkenden Behälter für eine Zeitspanne im Bereich von 14-25 Tagen gehalten wird.

4. Verfahren zum Züchten von Kräutern nach einem der vorhergehenden Ansprüche, wobei die zweite Stufe eine Zeitspanne von 13-30 Tagen lang dauert.

5. Verfahren zum Züchten von Kräutern nach irgendeinem der vorhergehenden Ansprüche, ferner Folgendes umfassend:
- das Umpflanzen oder Umsetzen des Krautsetzlings in eine dritte Stufe (205), wobei der Krautsetzling mit fortwährend zunehmendem freiem umgebendem Platz zum Wachsen, bis die Erntegröße erreicht ist, versehen wird.

6. Verfahren zum Züchten von Kräutern nach Anspruch 5, wobei die zweite Stufe eine Zeitspanne von 3 - 15 Tagen lang dauert.

7. Verfahren zum Züchten von Kräutern nach einem der Ansprüche 5 - 6, wobei die dritte Stufe des Heranzüchtens der Krautpflanze, bis die Erntegröße erreicht ist, eine Zeitspanne von 10-19 Tagen lang dauert.

8. Verfahren zum Züchten von Kräutern nach einem der vorhergehenden Ansprüche, wobei die Gesamtzeit der Erzeugung vom Säen bis zum Ernten im Bereich von 36 - 50 Tagen liegt.

9. Verfahren zum Züchten von Kräutern nach einem der vorhergehenden Ansprüche, wobei Küchenkräuter in beschränkende Behälter in unmittelbarer Nähe voneinander gepflanzt werden, wobei jeder der 70 - 120 beschränkenden Behälter einen Bereich von 0,15 - 0,20 m² einnimmt.

10. Verfahren zum Züchten von Kräutern nach einem der vorhergehenden Ansprüche, wobei Küchenkräuter zur zweiten Stufe umgepflanzt werden, wobei jeder der 8 - 60 Behälter einen Bereich von 0,2 - 0,3 m² einnimmt.

11. Verfahren zum Züchten von Kräutern nach einem der vorhergehenden Ansprüche, wobei das Küchenkraut während der Erzeugung bei einer Temperatur im Bereich von 1 - 20 Grad Celsius gehalten wird.

12. Verfahren zum Züchten von Kräutern nach einem der vorhergehenden Ansprüche, wobei der beschränkende Behälter ein Stecklingblocktopf oder ein Stecklingblock ist, der auf einer Stecklingblockplatte gehalten wird.

13. Verfahren zum Züchten von Kräutern nach Anspruch 12, wobei der Stecklingblock einen Öffnungsdurchmesser (c) von weniger als 60 mm, eine Höhe (b) geringer als 80 mm aufweist.

14. Verfahren zum Züchten von Kräutern nach Anspruch 12, wobei der Stecklingblock einen rechteckigen Querschnitt aufweist, jede Seite kleiner als 60 mm ist und wobei der Stecklingblock eine Höhe (b) von weniger als 80 mm aufweist.

## Revendications

1. Procédé de culture de plantes aromatiques, consistant à :
- planter une plante aromatique (201),
- permettre à la plante aromatique de germer (202), jusqu'à ce que la plante aromatique ait bourgeonnée, et soit un semis de plantes aromatiques,
- restreindre la croissance de la racine du semis de plante aromatique en effectuant une transplantation du semis de plante aromatique vers un conteneur restrictif ou en maintenant le semis de plante aromatique dans un conteneur restrictif (203),
- transplanter le semis de plante aromatique vers une seconde phase, le semis étant cultivé de façon à croître et à développer un système de racines plus important.

2. Procédé de culture de plantes aromatiques selon la revendication 1, dans lequel la plante aromatique est l'un du Basilic, de la Coriandre, ou de l'Aneth.

3. Procédé de culture de plantes aromatiques selon l'une quelconque des revendications précédentes, dans lequel le semis de plantes aromatiques est maintenu dans le conteneur restrictif pendant une période de temps comprise dans la gamme allant de 14 à 25 jours.

4. Procédé de culture de plantes aromatiques selon l'une quelconque des revendications précédentes, dans lequel la seconde phase dure pendant une période de temps allant de 13 à 30 jours.

5. Procédé de culture de plantes aromatiques selon l'une quelconque des revendications précédentes, consistant en outre à :
- transplanter ou déplacer le semis de plante aromatique vers une troisième phase (205), dans laquelle on fournit de manière progressive au semis de plante aromatique de l'espace environnant libre pour croître jusqu'à ce qu'une taille de récolte soit atteinte.

6. Procédé de culture de plantes aromatiques selon la revendication 5, dans lequel la seconde phase dure pendant une période de temps allant de 3 à 15 jours.

7. Procédé de culture de plantes aromatiques selon l'une quelconque des revendications 5 à 6, dans lequel la troisième phase de culture de la plante aromatique jusqu'à ce qu'une taille de récolte soit atteinte dure pendant une période de temps allant de 10 à 19 jours.

8. Procédé de culture de plantes aromatiques selon l'une quelconque des revendications précédentes, dans lequel le temps total de production depuis l'ensemencement jusqu'à la récolte est compris dans la gamme allant de 36 à 50 jours.

9. Procédé de culture de plantes aromatiques selon l'une quelconque des revendications précédentes, dans lequel les plantes aromatiques sont transplantées dans des conteneurs restrictifs dans une proximité immédiate, dans lequel tous les 70 à 120 conteneurs restrictifs occupent une surface comprise entre 0,15 et 0,20 m².

10. Procédé de culture de plantes aromatiques selon l'une quelconque des revendications précédentes, dans lequel les plantes aromatiques sont transplantées vers la seconde phase, dans laquelle tous les 8 à 60 conteneurs occupent une surface comprise entre 0,2 et 0,3 m².

11. Procédé de culture de plantes aromatiques selon l'une quelconque des revendications précédentes, dans lequel la plante aromatique est maintenue à une température comprise dans la gamme allant de 1 à 20 degrés Celsius pendant la production.

12. Procédé de culture de plantes aromatiques selon l'une quelconque des revendications précédentes, dans lequel le conteneur restrictif est un couvercle à fiches ou une fiche comprise sur un plateau à cellules.

13. Procédé de culture de plantes aromatiques selon la revendication 12, dans lequel la fiche possède un diamètre d'ouverture (c) inférieur à 60 mm, une hauteur (b) inférieure à 80 mm.

14. Procédé de culture de plantes aromatiques selon la revendication 12, dans lequel la fiche possède une section transversale rectangulaire, chaque côté est inférieur à 60 mm, et dans lequel la fiche possède une hauteur (b) inférieure à 80 mm.
